# EUROPEAN PATENT SPECIFICATION

(11) **EP 1 182 024 B1**
(45) Date of publication and mention of the grant of the patent: **06.10.2004**
(21) Application number: 01306944.8
(22) Date of filing: 15.08.2001
(51) Int. Cl.: B29C 45/14, B29C 63/02, B29C 70/78

(54) **Moulding of plastics part with soft surface**
Giessen eines Plastikteils mit weicher Oberfläche
Moulage de pièce en matière plastique avec surface souple

(30) Priority: 26.08.2000 GB 0021009
(43) Date of publication of application: 27.02.2002
(73) Proprietor: Visteon UK Limited, Laindon, Essex SS15 6TD (GB)
(72) Inventor: Eves, John, Upminster, Essex,RM14 3JD (GB); Edson, Michael D., Grays, Essex, RM17 6UH (GB); Pearson, Lee S., Rayleigh, Essex, SS6 9TU (GB)
(74) Representative: Copp, David Christopher

(56) References cited:
- EP-A- 0 268 954
- DE-A- 3 439 101
- US-A- 5 395 668
- US-A- 5 804 117
- PATENT ABSTRACTS OF JAPAN vol. 1999, no. 05, 31 May 1999 (1999-05-31) & JP 11 034065 A (TOYODA GOSEI CO LTD), 9 February 1999 (1999-02-09)

## Description

This invention relates to a method of and apparatus for moulding a plastics article, at least a part of which has a 'soft-feel' finish.

It is known to be desirable to incorporate a 'soft-feel', in other words a yieldable surface to parts which have surfaces in the passenger compartment of a motor vehicle. This gives improved aesthetic/tactile comfort for the vehicle occupants and can help to minimise injury in the event of an impact of the vehicle with another object.

Most such parts, for example the instrument panel, the console and the door trims are moulded in a shape which has three dimensions. The manufacture of such parts calls for a moulding technique, which is more often than not a plastics moulding technique. The part needs to have sufficient 'solid' plastics to support the shape and to support any loads which will, in use, be imposed on the part.

The 'soft-feel' is usually produced by applying a layer of soft material, typically a foamed material, to the part surface. This layer of material can be attached to a moulded part by adhesive after the part itself has been moulded. This is time consuming, difficult to do and expensive.

It is also known to place the layer of soft material in the mould tool and then to use an injection moulding process to mould plastic behind the material. However, with this technique it is difficult to make a tidy edge where the soft material meets the relatively rigid part. Patent document US 5,395,668, on which the preamble of independent claim 1 is based, relates to an air bag apparatus and discloses a method of manufacturing a plastics moulded part with a soft feel surface using low pressure moulding.

According to the present invention, there is. provided a method of manufacturing a plastics moulded part with a soft-feel surface, as defined in claim 1.

Soft material means any sheet-like material which can be compressed in thickness and can subsequently recover to its original thickness. Rubbers and elastomers are examples of such materials, but preferably the material is or includes a foamed plastic. More specifically the material may be a laminate made up of an outer skin (which may be a continuous sheet material or a fabric, eg a woven or knitted cloth), a foam middle layer and an inner skin. After moulding, the inner skin will bond to the injected plastics so that a unitary product is produced.

It is an advantage of the present invention that a moulded part can be produced, with an outer surface which, in part has a soft feel and in part is hard, with the soft surface being substantially flush with the hard surface and there being substantially no gap where the soft feel surface meets the hard surface.

The invention will now be further described, by way of example, with reference to the accompanying drawings, in which:
Figure 1 is a perspective view of a console armrest for a motor vehicle, constructed using the method of the present invention;
Figures 2 to 4 show a cross-section through a set of mould tools, at a position corresponding to the position of the line A-A, at three sequential steps in the method; and
Figure 5 shows a section on the line A-A through part of a completed armrest.

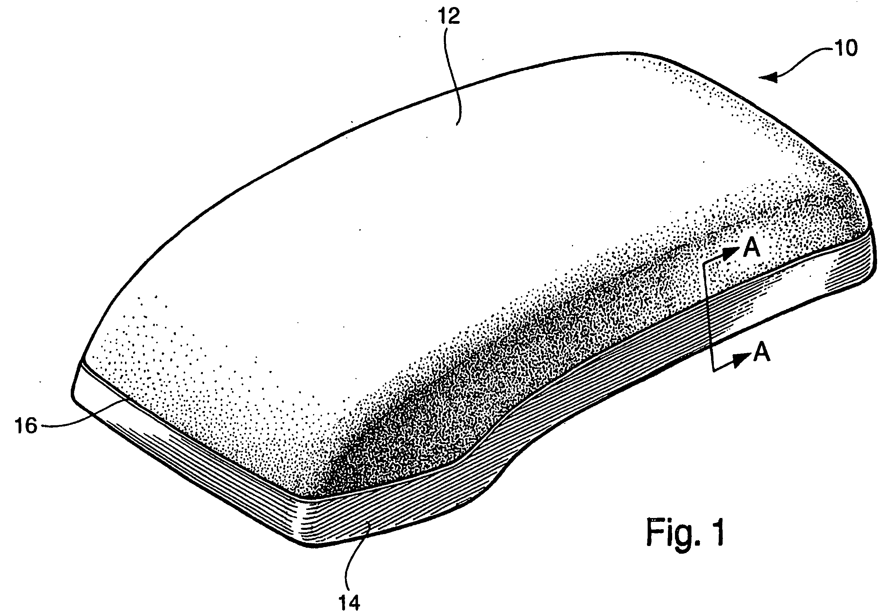

Figure 1 shows a typical component 10 which can be manufactured using the process of this invention. The component is a motor vehicle armrest which also forms a top cover to a storage box in a vehicle console between the vehicle front seats.

The armrest 10 has an injection moulded plastic body which has a major surface 12 covered in a soft-feel material and an edge region 14 where hard plastic is exposed. This invention is concerned with the region where the soft and hard surfaces meet, ie the detail at the junction line 16.

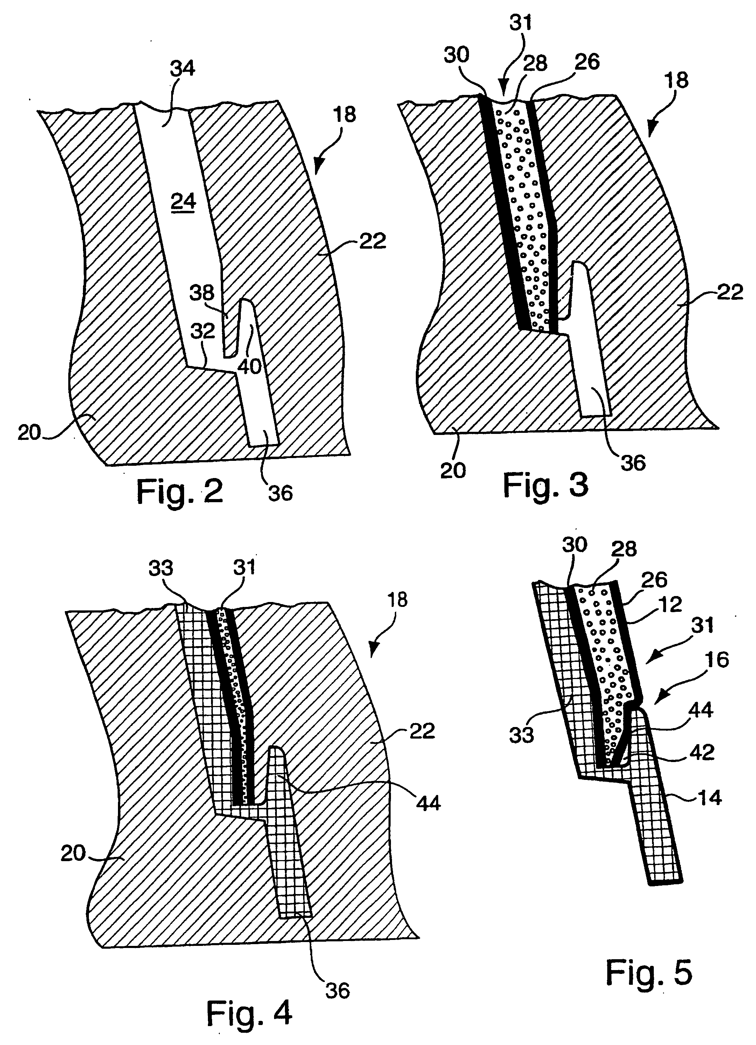

The armrest is to be manufactured by injection moulding in a moulding tool 18. Figure 2 shows a section through a part of the tool, the section being taken on the lines A-A from Figure 1. The tool has a core side 20 and a cavity side 22 which define a cavity 24 between them. The core side 20 and cavity side 24 are shown in the relative positions they take up when the tool is closed.

The first stage in manufacturing this armrest is to prepare the material which will form the soft-feel surface. In this example, the material is a three-layer laminate with an outer skin 26, a foam layer 28 and an inner skin 30. This can be seen in Figure 3. A blank 31 of appropriate size is cut from a sheet, and is then vacuum formed into the approximate three-dimensional shape required to form a the armrest surface.

The tool cavity 24 has an upper region 34 in which the upper part 12 of the armrest will be moulded, and a lower region 36 in which the edge region 14 of the armrest will be moulded. Between these two regions of the tool, there is a transition region. In the transition region, there is a step 32 on the core side of the tool. This step provides an edge against which the soft-feel material can be placed in the mould. On the cavity side of the tool, there is a downwardly-extending fin 38 and, outboard of that fin, a narrow recess 40. All of these features, ie the step, the fin and the recess extend all the way around the tool where the junction line 16 runs.

The next stage in manufacturing is to place the blank 31 in the tool, which at this stage will be open. As can be seen in Figure 3, the edges of the blank fit against the step 32 in the mould cavity 24. At this stage, the foam is uncompressed and the soft-feel material blank 31 substantially fills the cavity 24.

Next, the tool is closed (Figure 3) and molten plastic 33 is injected into the tool, using standard injection moulding technology. Details of the injection equipment and of the tool features required to enable injection to take place are not shown, as they will be well known to the skilled man and form no part of this invention. The injection takes place from the core side 20 of the tool, and the pressure generated in the molten plastic by the injection equipment, as well as forcing the molten plastic to flow throughout the tool cavity, also acts against the inner layer 30 of the soft-feel blank 31 to compress the foam 28. This can be seen in Figure 4. It will also be seen from Figure 4 that once the foam has been compressed, a passage opens up between the upper and lower regions of the tool cavity at the step 32. The moulding conditions, the composition of the inner laminate layer 30 and the injected plastics will be chosen so that a bond is formed during the injection process between the laminate and the injected plastic.

Suitable materials are: polypropylene for the base moulding, extruded polypropylene for the inner layer 30, polypropylene foam for the core 28 and TPO (thermoplastic olefins) for the outer layer 26. The outer layer can if desired be printed with a grain pattern, carry a flocked surface or have some other decorative finish. Many other different materials and combinations of materials can however be used, and the invention is not restricted to any particular material or materials. Alternatively, the outer skin 26 can be a fabric, for example a woven or knitted fabric.

Once injection has been completed, and the plastic has set, the tool is opened. Once the constraint provided by the cavity tool wall is removed, the foam expands again (this time expanding from the inner laminate layer 30 outwards) so that the soft-feel characteristic is restored and so that the outer layer 26 of the laminate lies flush with the outer surface of the hard plastic edge region 14. The edges of the blank 31 are hidden in a channel 42 formed in the moulded part by the fin 38, and are thus concealed.

The dimensions of the blank and of the tools are deigned so that, when the foam in the blanks expands after removal from the mould tool, the outer surface 12 and 14 are substantially flush with one another. This provides a neat finish to the part, and no major finishing operations are required after the part has been removed from the mould.

## Claims

1. A method of manufacturing a plastics moulded part with a soft-feel surface (12), the method comprising the steps of preparing a sheet of soft material (26,28,30) of a desired shape and form, preparing a mould tool (18) to mould the part in such a way that a rib (44) on the moulded part extends generally parallel to the surface which will be covered by the soft material, placing the soft material (26,28,30) in the mould tool (18) with the edges of the material in register with the rib (44), injecting molten plastics (33) into the mould tool (18) to fill the tool and to compress the soft material (26,28,30), allowing the mould tool and its contents to cool and removing the moulded part from the tool (18) to allow the soft material (26,28,30) to expand, **characterised in that** the mould tool (18) is closed before the molten plastic (33) is injected and **in that** the soft material is a laminate, with a foam layer (28) between an outer skin (26) and an inner skin (30).

2. A method as claimed in claim 1, wherein the sheet of soft material (26,28,30) is vacuum formed before being placed in the mould tool (18).

3. A method as claimed in claim 1 or claim 2, wherein the moulding conditions and the compositions of the inner skin (30) of the soft material laminate (26,28,30) and the injected plastics (33) are such that a bond is formed during the injection process between the laminate (26,28,30) and the injected plastic (33).

4. A method as claimed in any preceding claim, in which the dimensions of the blank and of the tools is such that after the soft material has been removed from the mould tool and has expanded, an outer surface (12) of the laminate (26,28,30) is substantially flush with an outer surface (14) of the moulded part.

## Patentansprüche

1. Verfahren zur Herstellung eines aus Kunststoff gegossenen Teils mit einer sich weich anfühlenden Oberfläche (12), welches Verfahren folgende Schritte beinhaltet: Vorbereiten eines Blattes aus weichem Material (26, 28, 30) mit einer gewünschten Gestalt und Form, Vorbereiten eines Gießwerkzeuges (18) zum Gießen des Teiles derart, daß eine Rippe (44) an dem Gußteil allgemein parallel zu der mit dem weichen Material zu überziehenden Oberfläche verläuft, Einlegen des weichen Materials (26, 28, 30) in das Formwerkzeug (18), wobei die Ränder des Materials mit der Rippe (44) fluchten, Einspritzen von schmelzflüssigem Kunststoff (33) in das Gießwerkzeug (18), so daß das Werkzeug gefüllt und das weiche Material (26, 28, 30) zusammengedrückt wird, Abkühlenlassen des Gießwerkzeuges und seines Inhaltes und Herausnehmen des Gußteiles aus dem Gießwerkzeug (18), so daß sich das weiche Material wieder ausdehnen kann,
**dadurch gekennzeichnet, daß** das Gießwerkzeug (18) geschlossen ist, bevor der schmelzflüssige Kunststoff (33) eingespritzt wird, und dadurch, daß das weiche Material ein Laminat mit einer Schaumschicht (28) zwischen einer Außenhaut (26) und einer Innenhaut (30) ist.

2. Verfahren nach Anspruch 1, worin das Blatt aus weichem Material (26, 28, 30) vakuumgeformt wird, bevor es in das Gießwerkzeug (18) eingelegt wird.

3. Verfahren nach Anspruch 1 oder Anspruch 2, worin die Gießbedingungen und die Zusammensetzungen der Innenhaut (30) des Weichstofflaminates (26, 28, 30) sowie des eingespritzten Kunststoffes (33) so gewählt sind, daß im Verlauf des Spritzgießprozesses eine Bindung zwischen dem Laminat (26, 28, 30) und dem eingespritzten Kunststoff (33) gebildet wird.

4. Verfahren nach einem beliebigen der vorangehenden Ansprüche, worin die Maße des Rohlings und diejenigen der Werkzeuge derart sind, daß, nachdem das weiche Material aus dem Gießwerkzeug entnommen worden ist und sich wieder ausgedehnt hat, eine Außenfläche (12) des Laminates (26, 28, 30) im wesentlichen bündig mit einer Außenfläche (14) des Gußteiles liegt.

## Revendications

1. Procédé de fabrication d'une pièce en plastique moulée dotée d'une surface souple au toucher (12), le procédé comprenant les étapes consistant à préparer une feuille de matériau souple (26, 28, 30) ayant la taille et la forme souhaitées, à préparer un outillage de moule (18) pour mouler la pièce de telle sorte qu'une nervure (44) sur la pièce moulée soit orientée de façon générale parallèlement à la surface qui sera recouverte par le matériau souple, à placer le matériau souple (26, 28, 30) dans l'outillage de moule (18), les bords du matériau étant calés sur et coïncidant avec la nervure (44), à injecter du plastique en fusion (33) dans l'outillage de moule (18) pour remplir l'outillage et comprimer le matériau souple (26, 28, 30), à laisser refroidir l'outillage de moule et son contenu et à retirer la pièce moulée de l'outillage (18) pour permettre l'expansion du matériau souple (26, 28,3 0), **caractérisé en ce que** l'outillage de moule (18) est fermé avant d'injecter le plastique en fusion (33) et **en ce que** le matériau souple est un laminé comprenant une couche de mousse (28) entre une peau externe (26) et une peau interne (30).

2. Procédé selon la revendication 1, dans lequel la feuille de matériau souple (26, 28, 30) est mise en forme sous vide avant d'être placée dans l'outillage de moule (18).

3. Procédé selon les revendications 1 ou 2, dans lequel les conditions de moulage, la composition de la peau interne (30) du matériau souple laminé (26, 28, 30) et le plastique injecté (33) sont tels qu'une liaison se forme pendant le processus d'injection entre le laminé (26, 28, 30) et le plastique injecté (33).

4. Procédé selon l'une des revendications précédentes, dans lequel les dimensions du flan et des outillages sont telles qu'après le retrait du matériau souple de l'outillage de moule et l'expansion du matériau, une surface externe (12) du laminé (26, 28, 30) affleure sensiblement la surface externe (14) de la pièce moulée.
